# EUROPÄISCHE PATENTANMELDUNG

(11) **EP 0 993 991 A1**
(43) Veröffentlichungstag der Anmeldung: **19.04.2000**
(21) Anmeldenummer: 99118140.5
(22) Anmeldetag: 11.09.1999
(51) Int. Cl.: B60R 13/02, B60R 1/00, B60R 11/00, B60N 3/02

(54) **A-Säulen-Dachmodul**

(30) Priorität: 15.10.1998 DE 19847495
(71) Anmelder: DaimlerChrysler AG, 70567 Stuttgart (DE)
(72) Erfinder: Weber, Norbert, 71149 Bondorf (DE)

(57) **Zusammenfassung**

Die Erfindung betrifft ein A-Säulen-Dachmodul mit Befestigungsstellen für Fahrzeuginnenraumausstattungsteile (6 bis 13), wie Sonnenblenden, Haltegriffe, Leuchten, Dachbedieneinheiten etc.

Gemäß der Erfindung weist das A-Säulen-Dachmodul einen im wesentlichen U-förmigen Grundkörper (5) auf, der sich im eingebauten Zustand zwischen den A-Säulen (3, 4) und mit seinen Enden in Richtung der B-Säulen erstreckt. Darüber hinaus sind die Fahrzeuginnenraumausstattungsteile (6 bis 13) funktional in das Dachmodul (1) integriert.

## Beschreibung

Die Erfindung betrifft ein A-Säulen-Dachmodul mit Befestigungsstellen für Fahrzeuginnenraumausstattungsteile, wie Sonnenblenden, Haltegriffe, Leuchten, Dachbedieneinheiten etc.

Aus der DE 38 20 845 C2 ist eine Montageeinheit für Fahrzeugdächer mit einem Fertighimmel und einem Rahmen bekannt. An dem Rahmen sind Befestigungsstellen für Fahrzeuginnenraumausstattungsteile, wie Sonnenblenden, Haltegriffe und Leuchten vorgesehen. Bevor die Fahrzeuginnenraumausstattungsteile an dem Rahmen befestigt werden, wird der Fahrzeughimmel an dem Rahmen angebracht. Im Fahrzeughimmel sind Öffnungen für die Fahrzeuginnenraumausstattungsteile vorgesehen.

Bei der bekannten Montageeinheit hat es sich als nachteilig erwiesen, dass zuerst der Fertighimmel und erst im Anschluss daran die Fahrzeuginnenraumausstattungsteile befestigt werden können. Außerdem ist eine solche komplette Montageeinheit jeweils nur für einen Fahrzeugtyp verwendbar.

Aus der DE 40 05 884 C2 ist eine Montageaufnahme zur Verwendung bei der Montage von Fertighimmeln bekannt. Die bekannte Montageaufnahme ist mit Aufnahmeelementen zum Aufnehmen und Vorpositionieren des durch Fensteröffnungen in die Karosserie einzubringenden Fertighimmels sowie von Zusatzbauteilen, wie Haltegriffen, Sonnenblenden und dergleichen und/oder von Befestigungsteilen versehen. Zur Verwendung ein- und derselben Montageaufnahme für unterschiedliche Fertighimmelvarianten, insbesondere für Fertighimmel mit und ohne verschließbare Dachöffnung, ist mindestens ein Teil der Aufnahmeelemente wahlweise in eine der Montage einer der Fertighimmelvarianten angepasste Arbeitsstellung verstellbar.

Die bekannte Montageaufnahme hat den Nachteil, dass sie aufwendig und kompliziert zu handhaben ist. Außerdem muss die Montageaufnahme nach dem Einbau des Fertighimmels und der Fahrzeuginnenraumausstattungsteile wieder entfernt werden. Aus der EP 0 170 086 B1 ist eine Vorrichtung zum Einbau eines Dachhimmels nebst anderer, von innen am Dach zu befestigender Teile, wie Sonnenblenden, Haltegriffe und dergleichen mehr, in einer Karosserie von Kraftfahrzeugen bekannt. Bei der bekannten Vorrichtung wird ein Montagegestell mit Aufnahme- und Lösevorrichtungen für den in die Karosserie einzubauenden Dachhimmel derart vormontiert, dass der Dachhimmel seiner späteren Endmontageposition auf dem Montagegestell entspricht. Außer dem Dachhimmel werden auch die anderen innen am Dach zu befestigenden Teile entsprechend ihrer späteren Endmontageposition auf dem Montagegestell vormontiert. Das Montagegestell weist an mindestens zwei gegenüberliegenden Seitenkante Halteelemente auf, die zugleich als Zentriervorrichtung für die Montageeinheit am Dach im Inneren der Karosserie dienen. Nach dem Einbau des Dachhimmels und der zu befestigenden Teile wird das Montagegestell anschließend mittels einer Bewegungseinrichtung abgesenkt und schließlich aus der Karosserie herausgefahren.

Diese Vorrichtung ist, wie die vorab beschriebene Montageaufnahme, aufwendig und kompliziert zu handhaben. Außerdem muss sie ebenfalls nach dem Einbau des Dachhimmels und der zu befestigenden Teile entfernt werden.

Aus der DE 90 01 106 U1 ist eine Halterung für ein audioelektronisches Gerät in einem Kraftfahrzeug bekannt. Die bekannte Halterung umfasst ein bügelartiges, der oberen Breite der vorderen Windschutzscheibe eines Kraftfahrzeuges entsprechendes Kunststoffpressteil mit Befestigungselementen an der Karosserieinnenseite und mit einer in der Mitte in einer Aussparung vorgesehenen Ablage- und ggf. Befestigungsfläche für das Gerät sowie mit einem nach unten verlaufenden, breiten Flansch, der eine Aussparung oder Öffnung für die Rückspiegelhalterung aufweist. Außerdem sind am Ende der Arme des bügelartigen Kunststoffpressteils Ausformungen mit Aussparungen für die Halterungen der Sonnenblenden vorgesehen.

Außerdem ist aus der DE 1 282 494 ein Kopfschutz für Kraftfahrzeuginsassen bekannt. Der bekannte Kopfschutz besteht aus einem unterhalb des vorderen Dachabschnittes im Bereich der Oberkante der Windschutzscheibe quer zu dem Fahrzeug verlaufenden, plastisch deformierbaren Köroer. Dabei findet ein im Wesentlichen etwa halbschalenförmig ausgebildeter, zur Aufnahme von Verformungsenergie deformierbarer Körper Verwendung, der nur mit seinen vorderen und/oder seitlichen Teilen am Fahrzeugdach vorzugsweise leicht lösbar befestigt ist. Am Boden des deformierbaren Körpers sind der Rückspiegel und Sonnenblenden angelenkt.

Aus der DE 43 09 492 C1 ist eine Dachinnenkonsole für Kraftfahrzeuge bekannt, die aus einem Kunststoffformteil mit einem Randwulst besteht und nachträglich anbaubar ist. Innerhalb des Randwulstes sind im abgesenkten Mittelbereich in Ausschnitten und Öffnungen Geräte, Schalter, Leuchten, Lautsprecher und dergleichen angeordnet. Außerdem weist die Dachinnenkonsole quer verlaufende Wülste auf, die mehrere kleinformatigere Vertiefungen für Funktionsgruppen bilden. Die Vertiefungen sind mit Ausschnitten zur Aufnahme von Trägerplatten für die Geräte, Schalter, Leuchten und dergleichen versehen.

Aufgabe der Erfindung ist es, ein A-Säulen-Dachmodul bereitzustellen, das in einfacher Art und Weise vormontierbar und für verschiedene Fahrzeugtypen verwendbar ist. Die Aufgabe ist bei einem A-Säulen-Dachmodul mit Befestigungsstellen für Fahrzeuginnenraumausstattungsteilen, wie Sonnenblenden, Haltegriffe, Leuchten, Dachbedieneinheiten etc., dadurch gelöst, dass das A-Säulen-Dachmodul einen im Wesentlichen U-förmigen Grundkörper aufweist, der sich im eingebauten Zustand zwischen den A-Säulen und mit seinen Enden in Richtung der B-Säulen erstreckt, und dass die Fahrzeuginnenraumausstattungsteile funktional in das Dachmodul integriert sind. Durch die Integration der Fahrzeuginnenraumausstattungsteile in das Dachmodul entfällt das Entfernen der bekannten Montageaufnahmen. Die Fahrzeuginnenraumausstattungsteile können vor dem Einbau des A-Säulen-Dachmoduls endgültig an diesem befestigt werden. Ein derartig vormontiertes A-Säulen-Dachmodul kann kostengünstig bei einem Systemlieferanten gefertigt und "just in time" angeliefert werden. Weil sich das erfindungsgemäße A-Säulen-Dachmodul nur im Bereich der A-Säulen erstreckt, kann ein und dasselbe Modul für verschiedene Fahrzeugtypen, wie Limousine und Kombi, verwendet werden.

Eine besondere Ausführungsart der Erfindung ist dadurch gekennzeichnet, dass die A-Säulen-Blenden in das Dachmodul integriert sind. Dadurch wird der Übergang von den A-Säulen-Blenden zum Fahrzeughimmel mehr in den Dachbereich hinein verlegt. Das Dachmodul bildet einen optisch ansprechenden Abschluss für den Fahrzeughimmel.

Eine weitere besondere Ausführungsart der Erfindung ist dadurch gekennzeichnet, dass das Dachmodul auf der zum Fahrzeuginnenraum gewandten Seite Vertiefungen zur Aufnahme der Sonnenblenden aufweist. Dadurch wird erreicht, dass die Sonnenblenden in ihrer eingeklappten Stellung in optisch ansprechender Weise im Dachmodul versenkt sind.

Eine weitere besondere Ausführungsart der Erfindung ist dadurcn gekennzeichnet, dass die Vorderkante des Dachmoduls an die Oberkante der Frontscheibe des Fahrzeugs bzw. deren Abdichtung angepasst ist. Dadurch wird der Übergang von der Frontscheibe des Fahrzeugs bzw. deren Abdichtung zum Fahrzeughimmel weiter in das Innere des Fahrzeugdachs verlegt. Das erfindungsgemäße A-Säulen-Dachmodul liefert auch in diesem Bereich zusätzlich zu der vereinfachten Montage eine optisch ansprechende Lösung.

Eine weitere besondere Ausführungsart der Erfindung ist dadurch gekennzeichnet, dass die Seitenkanten des Dachmoduls an die Kontur des Dachrahmens angepasst sind. Vorzugsweise sind in diesen Bereichen des Dachmoduls Haltegriffe angebracht. Die Haltegriffe können entweder feststehend oder schwenkbar ausgebildet sein.

Eine weitere besondere Ausführungsart der Erfindung ist dadurch gekennzeichnet, dass Luftkanäle in das Dachmodul integriert sind. Durch die Luftkanäle an dieser Stelle kann Luft von außen in den Fahrzeuginnenraum eingeleitet werden. Ein unangenehmes "Herabfallen" der Luft auf die Fahrzeuginsassen wird verhindert.

Eine weitere besondere Ausführungsart der Erfindung ist dadurch gekennzeichnet, dass eine Crash-Box in das Dachmodul integriert ist. Die sog. Crash-Box dient dazu, im Falle eines Unfalls die insbesondere auf den Kopf der Fahrzeuginsassen wirkenden Kräfte zu vermindern. Dieser Aspekt ist insbesondere im Hinblick auf zukünftige Sicherheitsrichtlinien interessant.

Eine weitere besondere Ausführungsart der Erfindung ist dadurch gekennzeichnet, dass das Dachmodul auf der vom Fahrzeuginnenraum abgewandten Seite Mittel zum Befestigen des Dachmoduls an dem Fahrzeugdach aufweist. Die Befestigung des Dachmoduls an dem Fahrzeugdach erfolgt praktischerweise mit Schnappverbindungselementen. Alternativ können Schraubverbindungen eingesetzt werden. Selbstverständlich kann das Dachmodul auch mit Hilfe einer Klebverbindung an dem Fahrzeugdach bzw. dem Dachrahmen befestigt werden.

Bei einem Kraftfahrzeug mit einem Fahrzeugdach, einem Dachmodul der vorab beschriebenen Art und einem Fahrzeughimmel ist die o. a. Aufgabe dadurch gelöst, dass der Fahrzeughimmel zwischen dem Fahrzeugdach und dem Dachmodul angeordnet ist. Die Befestigung des Fahrzeughimmels kann mit den gleichen Befestigungsmitteln realisiert werden, die auch zum Befestigen des Dachmoduls an dem Fahrzeugdach verwendet werden. Die Befestigung des Fahrzeughimmels kann auch nur durch das A-Säulen-Dachmodul, durch Pressen desselben gegen das Fahrzeugdach, erfolgen. Durch die Materialdoppelung beim Aufsetzen des Moduls auf den Himmel ergibt sich ein zusätzlicher Schutz.
Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. In der Zeichnung zeigt:
- Figur 1: eine erste Ausführungsform eines erfindungsgemäßen A-Säulen-Dachmoduls im eingebauten Zustand und
- Figur 2: eine zweite Ausführungsform eines erfindungsgemäßen A-Säulen-Dachmoduls im ausgebauten Zustand.

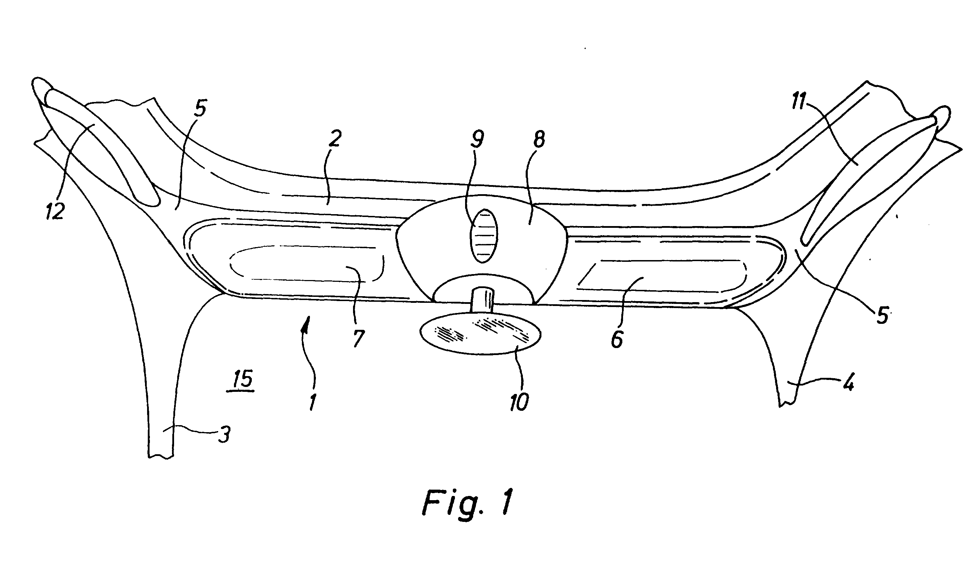

In Fig. 1 ist ein A-Säulen-Dachmodul 1 perspektivisch dargestellt, das an dem Dach eines Kraftfahrzeuges befestigt ist. Aus Gründen der Übersichtlichkeit ist von dem Dach in Fig. 1 nur ein Teil des Dachrahmens 2 mit den A-Säulen 3 und 4 dargestellt. Das A-Säulen-Dachmodul 1 hat einen U-förmigen Grundkörper 5. In dem Grundkörper 5 sind zwei Vertiefungen für Sonnenblenden 6 und 7 vorgesehen. Zwischen den Sonnenblenden 6 und 7 ist eine Bedieneinheit 8 ausgebildet. An der Bedieneinheit 8 sind eine Leuchte 9 und ein Rückspiegel 10 angebracht. Die Bedieneinheit kann darüber hinaus Bedienungselemente für ein Schiebedach aufweisen.

Der Grundkörper 5 erstreckt sich an dem Dachrahmen 2 von der Oberkante der Frontscheibe 15 in Richtung der (nicht dargestellten) B-Säulen. An den Enden des Grundkörpers 5 sind Haltegriffe 11 und 12 ausgebildet.

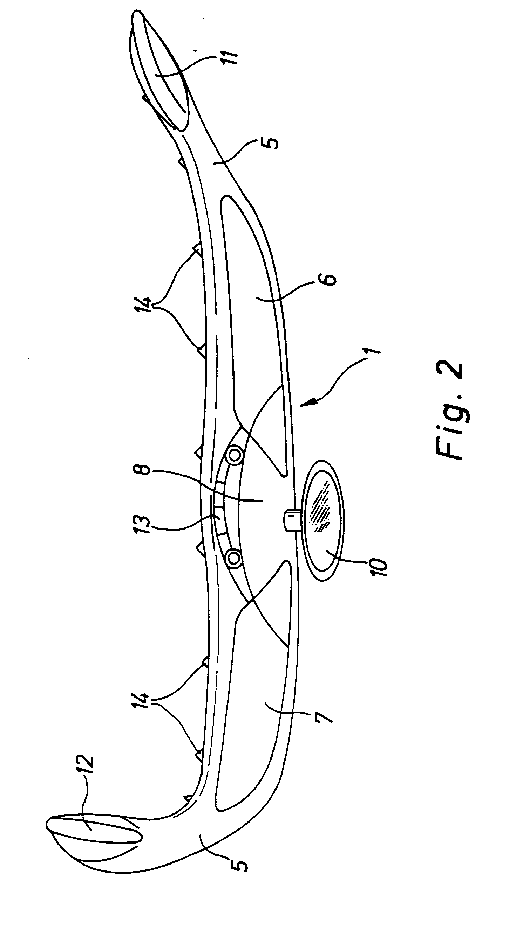

In Fig. 2 ist eine leicht abgewandelte Ausführungsform des A-Säulen-Dachmoduls aus Fig. 1 im ausgebauten Zustand dargestellt. Der Einfachheit halber sind gleiche Teile mit gleichen Bezugszeichen versehen. Die in Fig. 3 dargestellte Auführungsform unterscheidet sich von der in Fig. 1 dargestellten Ausführungsform im Wesentlichen dadurch, dass die Bedieneinheit 8 mit Lüftungslöchern 13 ausgestattet ist. Des Weiteren sieht man in der Fig. 2, dass auf der zum Fahrzeugdach gewandten Seite des A-Säulen-Dachmoduls 1 Befestigungselemente 14 vorgesehen sind. Die Befestigungselemente 14 wirken mit (nicht dargestellten) komplementären Befestigungselementen zusammen, die an dem Fahrzeugdach ausgebildet sind.
Die in den Figuren 1 und 2 dargestellten A-Säulen-Dachmodule können komplett von Zulieferern hergestellt werden. Der Einbau der vormontierten Module kann vollautomatisch erfolgen. Der Austausch eines eingebauten Moduls ist ebenfalls unproblematisch.

## Patentansprüche

1. A-Säulen-Dachmodul mit Befestigungsstellen für Fahrzeuginnenraumausstattungsteile (6 bis 13), wie Sonnenblenden, Haltegriffe, Leuchten, Dachbedieneinheiten etc., **dadurch gekennzeichnet**, dass das A-Säulen-Dachmodul einen im Wesentlichen U-förmigen Grundkörper (5) aufweist, der sich im eingebauten Zustand zwischen den A-Säulen (3, 4) und mit seinen Enden in Richtung der B-Säulen erstreckt, und dass die Fahrzeuginnenraumausstattungsteile (6 bis 13) funktional in das Dachmodul (1) integriert sind.

2. Dachmodul nach Anspruch 1, dadurch gekennzeichnet, dass die A-Säulen-Blenden in das Dachmodul (1) integriert sind.

3. Dachmodul nach einem der vorhergehenden Ansprüche, dadurch gekennzeichnet, dass das Dachmodul (1) auf der zum Fahrzeuginnenraum gewandten Seite Vertiefungen zur Aufnahme der Sonnenblenden (6, 7) aufweist.

4. Dachmodul nach einem der vorhergehenden Ansprüche, dadurch gekennzeichnet, dass die Vorderkante des Dachmoduls (1) an die Oberkante der Frontscheibe (15) des Fahrzeugs bzw. deren Abdichtung angepasst ist.

5. Dachmodul nach einem der vorhergehenden Ansprüche, dadurch gekennzeichnet, dass die Seitenkanten des Dachmoduls an die Kontur des Dachrahmens angepasst sind.

6. Dachmodul nach einem der vorhergehenden Ansprüche, dadurch gekennzeichnet, dass Luftkanäle (13) in das Dachmodul (1) integriert sind.

7. Dachmodul nach einem der vorhergehenden Ansprüche, dadurch gekennzeichnet, dass eine Crash-Box in das Dachmodul (1) integriert ist.

8. Dachmodul nach einem der vorhergehenden Ansprüche, dadurch gekennzeichnet, dass das Dachmodul (1) auf der vom Fahrzeuginnenraum abgewandten Seite Mittel (14) zum Befestigen des Dachmoduls (1) an dem Fahrzeugdach aufweist.

9. Kraftfahrzeug mit einem Fahrzeugdach, einem Dachmodul (1) nach einem der vorhergehenden Ansprüche und einem Fahrzeughimmel, dadurch gekennzeichnet, dass der Fahrzeughimmel zwischen dem Fahrzeugdach und dem Dachmodul (1) angeordnet ist.
